# EUROPÄISCHE PATENTSCHRIFT

(11) **EP 3 647 008 B1**
(45) Veröffentlichungstag und Bekanntmachung des Hinweises auf die Patenterteilung: **09.08.2023**
(21) Anmeldenummer: 19204236.4
(22) Anmeldetag: 21.10.2019
(51) Int. Cl.: B28B 1/44, A01G 9/02, B28B 11/00, B28B 13/02

(54) **VERFAHREN ZUR HERSTELLUNG EINES TOPFES AUS KERAMIK**
METHOD FOR MANUFACTURING A CERAMIC POT
PROCÉDÉ DE FABRICATION D'UN POT EN CÉRAMIQUE

(30) Priorität: 31.10.2018 DE 102018127298
(43) Veröffentlichungstag der Anmeldung: 06.05.2020
(73) Patentinhaber: Westerwälder Blumentopf-Fabrik Spang GmbH & Co. KG, 56235 Ransbach-Baumbach (DE)
(72) Erfinder: Ockenfeld, Karl-Wilhelm, 56235 Ransbach-Baumbach (DE)
(74) Vertreter: WSL Patentanwälte Partnerschaft mbB

(56) Entgegenhaltungen:
- EP-A1- 0 680 811
- EP-A2- 1 166 983
- DE-A1-102012 221 599
- DE-C- 291 891
- JP-A- H0 663 927
- US-A- 2 007 567

## Beschreibung

Die vorliegende Erfindung betrifft ein Verfahren zur Herstellung eines Topfes aus Keramik sowie einen mittels dieses Verfahrens hergestellten Topf aus Keramik. Bei dem Topf kann es sich insbesondere um einen Blumentopf handeln.

Töpfe aus Keramik werden unter anderem mittels Formpressen hergestellt. Ein solches Herstellungsverfahren wird im Folgenden am Beispiel eines Verfahrens zur Herstellung eines aus Ton bestehenden Blumentopfes erläutert.

Blumentöpfe werden heutzutage in der Regel in Massenfertigung durch Formpressen hergestellt.

Dabei wird eine Form mit einer Oberform und einer Unterform bereitgestellt, wobei zwischen der Oberform und der Unterform ein Spalt ausgebildet ist, der den Boden und die Wand des Topfes definiert. Zur Herstellung eines Topfes wird eine Tonmasse in die Unterform gegeben und die Tonmasse anschließend durch das Zusammenführen von Oberform und Unterform in den oben genannten Spalt gepresst, sodass nach dem Abschluss des Formpressens ein Grünling aus der Form entnehmbar ist, wobei die Form des Grünlings gleich der Form des Spaltes ist. Dieser Grünling wird anschließend in der Regel zu einem fertigen Blumentopf gebrannt.

In der EP 0 680 811 A1 wird beispielsweise ein Verfahren zum Tiefziehen von keramischen und/oder metallischen Pulvern für die Herstellung von Grünlingen zum Sintern offenbart, wobei auf ein thermostabiles organisches Vehikel ein einachsiger Druck angelegt wird, wodurch die viskose Mischung, die hergestellt wurde, in umgekehrter Richtung zum Druck fließt, sodass eine Form aufgefüllt wird, die die Geometrie des gebildeten Presslings bestimmt.

Aus der EP 1 166 983 A2 ist ein Verfahren gemäß dem Oberbegriff des Anspruchs 1 bekannt, mehr insbesondere ist hieraus ein Verfahren zum Herstellen von keramischen, mit Dekor versehenen Gefäßen bekannt, bei welchem ein Batzen plastischer Tonmasse zwischen einem feststehenden Unterteil und einem rotierenden Oberteil einer Metallform gepresst wird, wobei während des Zusammenfahrens der Metallform eine Dekorsuspension in den Spalt zwischen Unter- und Oberteil eingespritzt wird.

Mittels eines solchen klassischen Herstellungsverfahrens wurden in der Vergangenheit Blumentöpfe gleicher Form in Massenfertigung gefertigt. Die Form aller gefertigten Töpfe ist dabei durch die Form des Spaltes zwischen Oberform und Unterform vorgegeben. Eine solche Massenfertigung des immer gleichen Produktes entsprach lange Zeit dem Anspruch nach Perfektion und Uniformität, welcher von der Gesellschaft ausgehend an die Form von Alltagsgegenständen gestellt wurde.

Es hat sich allerdings in jüngerer Zeit auch unter anderem in Bezug auf Blumentöpfe gezeigt, dass die Nachfrage nach individuellen und auf den ersten Blick unvollkommenen Produkten gestiegen ist. Besonders nachgefragt sind in diesem Sinne Blumentöpfe im sogenannten **"used look"**, d. h. Blumentöpfe, die ein rustikales und individuelles Erscheinungsbild aufweisen. Derartige Blumentöpfe erzeugen den Eindruck, dass diesen Töpfen bereits einiges widerfahren ist und ihnen daher eine gewisse Geschichte innewohnt. Solche Blumentöpfe können dem Betrachter gewisse Attribute wie Individualität, Erfahrenheit und Besonderheit vermitteln. Dabei sollte der Topf eine einmalig vorkommende Form aufweisen und nicht mit weiteren Töpfen identisch ausgebildet sein.

Bisher entstehen Blumentöpfe im **"used look"** mehr oder weniger unfreiwillig dadurch, dass zunächst ein perfekter Blumentopf hergestellt wird und dieser im Anschluss mechanischen und chemischen Verwitterungsprozessen ausgesetzt wird. Es handelt sich hierbei sozusagen um den Alterungsprozess eines Blumentopfes, der durch die Umgebungseinflüsse, denen ein Blumentopf ausgesetzt ist, beeinflusst wird. Mittels dieses natürlichen Prozesses ist der hohe Bedarf an Blumentöpfen im **"used look"** allerdings nicht zu decken. Dieser Prozess eignet sich auch nicht für die Massenfertigung bzw. ist aus wirtschaftlichen Gesichtspunkten nicht dafür geeignet.

Es ist daher Aufgabe der vorliegenden Erfindung, ein für die Massenfertigung geeignetes Herstellungsverfahren zur Herstellung von Töpfen aus Keramik bereitzustellen, bei dem jeder hergestellte Topf individuell und unverwechselbar ist, d. h. dass trotz Massenfertigung kein Topf gefertigt wird, der mit einem anderen gefertigten Topf identisch ist. Es ist folglich ebenfalls Aufgabe der vorliegenden Erfindung, einen solchen individuellen, unverwechselbaren, aber durch Massenfertigung herstellbaren Topf bereitzustellen.

Diese Aufgabe wird gelöst durch ein Verfahren zur Herstellung eines Topfes aus Keramik mit den Schritten: Bereitstellen einer Form mit einer Unterform und einer Oberform, wobei die Oberform und die Unterform entlang einer Längsachse relativ zueinander von einer geöffneten Position in eine formgebende Position bewegbar sind und in der formgebenden Position ein Spalt zwischen der Oberform und der Unterform, mit einem Spaltvolumen, einen Boden und zumindest abschnittsweise eine Wand des Topfes definiert, Einbringen einer Keramikmasse mit mindestens einem ungebrannten keramischen Rohstoff und mit einem Keramikvolumen in die Unterform, Pressen der Oberform in die Unterform bis die formgebende Position erreicht ist, sodass die Keramik in dem Spalt verteilt wird und einen Grünling des Topfes bildet, Entnehmen des Grünlings aus der Form, Trocknen des Grünlings und Brennen des Grünlings zum Topf. Erfindungsgemäß ist das Keramikvolumen kleiner als das Spaltvolumen und wobei die Unterform eine den Boden des Topfes definierende Bodenfläche aufweist und die Keramikmasse vor dem Einbringen in die Unterform derart bereitgestellt wird, dass die Keramikmasse eine zylindrische Form mit kreisförmigen Deckelflächen aufweist, wobei die Deckelflächen kleiner sind als die Bodenfläche.

Das Einbringen der Keramikmasse in die Unterform erfolgt bevorzugt zu einem Zeitpunkt, wenn sich die Form in der geöffneten Position befindet. In der geöffneten Position kann die Oberform auch in Querrichtung zur Längsachse verschoben angeordnet sein. Vor dem Pressen der Ober form in die Unterform wird in diesem Fall die Oberform wieder derart relativ zur Unterform angeordnet, dass das Pressen der Oberform in die Unterform durch eine Bewegung der Oberform und/oder der Unterform entlang der Längsachse erfolgen kann. Die geöffnete Position ist bevorzugt derart gewählt, dass die Keramikmasse in die Unterform eingelegt werden kann, ohne dass dabei ein Risiko besteht, dass die Keramikmasse beim Einlegen andere Bestandteile der Form, insbesondere die Oberform, berührt.

Unter dem Keramikvolumen ist das Volumen der Keramikmasse unmittelbar vor dem Pressen der Oberform in die Unterform zu verstehen. Die Keramikmasse wird im Fachjargon auch unabhängig von ihrem Gewicht als Hubel oder Batzen bezeichnet.

Unter der formgebenden Position von Oberform und Unterform wird die relative Position von Oberform und Unterform zueinander verstanden, die beim Formpressen eingenommen wird, sodass sich im Anschluss an das Erreichen dieser formgebenden Position keine weiteren wesentlichen Verformungen der Keramikmasse und somit des Grünlings durch das Formpressen ergeben.

Das Trocknen findet bevorzugt innerhalb einer Trockenvorrichtung, vorzugsweise bei einer Temperatur in einem Bereich von 70° bis 100° C und besonders bevorzugt bei einer Temperatur in einem Bereich von 80° C bis 90°C statt. Das Brennen erfolgt in der Regel innerhalb eines Brennofens, vorzugsweise bei einer Temperatur in einem Bereich von 800° C bis 1100° C und besonders bevorzugt bei einer Temperatur in einem Bereich von 980° C bis 1000° C.

In einer ersten Alternative können die Oberform und die Unterform derart ausgestaltet sein, dass der Spalt derart von der Oberform und der Unterform begrenzt wird, dass er von der äußeren Umgebung vollständig abgeschlossen ist. In diesem Fall liegt die Oberform in der formgebenden Position an der Unterform an.

In einer zweiten Alternative besteht in der formgebenden Position von Oberform und Unterform zumindest eine Lücke zwischen Oberform und Unterform und somit eine Verbindung des Spalts zur äußeren Umgebung. Diese Lücke stellt eine Austrittsöffnung für überschüssige Keramikmasse dar. Eine solche Auslassöffnung wird dann notwendig, wenn das Keramikvolumen das Spaltvolumen übersteigt. Dies ist in der Regel bei der Herstellung perfekter Töpfe der Fall. Ist vor dem Abschluss des Formpressens der Spalt bereits vollständig mit Keramikmasse gefüllt, so kann die überschüssige Keramikmasse über diese Austrittsöffnung aus dem Spalt austreten. Eine Form mit einer solchen als Austrittsöffnung ausgebildeten Lücke besitzt daher den Vorteil, dass sie sowohl für die Herstellung perfekter Töpfe als auch für das erfindungsgemäße Verfahren zur Herstellung von Töpfen mit beabsichtigten Unregelmäßigkeiten verwendet werden kann.

Bei der ersten Alternative ergibt sich das Spaltvolumen aus dem Volumen des Spaltes, das von der Oberform, der Unterform und ggf. weiteren Bestandteilen der Form in der formgebenden Position begrenzt wird. Bei der zweiten Alternative ergibt sich das Spaltvolumen aus dem Volumen des Spaltes, der von der Oberform, der Unterform, ggf. weiteren Bestandteilen der Form und der Austrittsöffnung begrenzt wird.

Durch das erfindungsgemäße Verfahren wird die Massenfertigung von unverwechselbaren Töpfen ermöglicht. Trotz der industriellen Herstellung haben die Töpfe das Erscheinungsbild eines (Kunst-)Handwerksprodukts. Durch die Verwendung eines Keramikvolumens, das kleiner ist als das Spaltvolumen, kommt es beim Formpressen zu einer statistischen, unregelmäßigen Verteilung der Keramikmasse in den Spalt. Dadurch entsteht eine Wand des Topfes mit individuell geformten Rändern. Die Wand weist dabei beispielsweise an ihren Rändern Risse und Einkerbungen auf, wobei die Risse und Einkerbungen eines bestimmten Topfes aus statistischen Gründen nie identisch sind mit den Rissen und Einkerbungen eines weiteren, mit demselben Verfahren hergestellten Topfes.

Neben den Unregelmäßigkeiten der Wand durch Risse, erstreckt sich die Wand des Grünlings auch bezüglich ihres großskaligen Gesamteindrucks nicht gleichmäßig entlang der Längsachse. Dadurch kommt es auch zu einer großskaligen Verteilung der Wandhöhe über den gesamten Umfang des Topfes, wobei die Wandhöhe dabei der entlang der Längsachse gemessenen Höhe der Projektion der Wand auf die Längsachse entspricht. Kleinskalige Variationen der Wandhöhe, die durch Risse gebildet werden, erstrecken sich demgegenüber nur über einen Bruchteil des Umfangs des Topfes bzw. des Topfrandes.

In einer bevorzugten Ausführungsform weist die Keramikmasse einen Wassergehalt in einem Bereich von 10% bis 25%, bevorzugt 15% bis 20% und besonders bevorzugt 16% bis 18% auf. Dieser Wassergehalt wird auch als Restfeuchtegehalt bezeichnet und gibt an, zu wieviel Prozent die Keramikmasse aus Wasser besteht. Der Wassergehalt bestimmt maßgeblich die Plastizität und Formstabilität der Keramikmasse. Es hat sich gezeigt, dass mit den genannten Restfeuchtegehalten einerseits unverwechselbare Risse und Kerben erzeugt werden können, die das Erscheinungsbild des Topfes bestimmen, aber andererseits der Grünling nach dem Entnehmen eine hinreichende Formstabilität, d. h. eine hinreichend hohe Viskosität, aufweist.

In einer weiteren Ausführungsform erfolgt vor dem Pressen der Oberform in die Unterform ein Einschneiden der Keramikmasse mit einem Schneidwerkzeug. Dadurch wird auf vorteilhafte Weise die Riss- und Kerbenbildung beim Formpressen beeinflusst, da sich im Bereich des Schnittes bevorzugt größere Risse und Kerben bilden. Insbesondere kann damit die Entstehung größerer, markanter Risse herbeigeführt werden.

In einer bevorzugten Ausführungsform erfolgt das Einschneiden der Keramikmasse derart, dass nach dem Einbringen der Keramikmasse in die Unterform eine Oberfläche der Keramikmasse, die in der geöffneten Position der Form zu einer Öffnung der Unterform hin ausgerichtet ist, zumindest einen Einschnitt aufweist. Sind Oberform und Unterform in der geöffneten Position entlang der Längsachse angeordnet, so ist die Oberfläche mit dem mindestens einen Einschnitt in der geöffneten Position zur Oberform hin ausgerichtet. Die Oberform wird dann beim Verpressen durch die Öffnung der Unterform in die Unterform gepresst. Durch die beschriebene Anordnung des Einschnittes wird auf vorteilhafte Weise im Speziellen die Entstehung eines Risses beeinflusst, der sich entlang der Wand des Topfes erstreckt und zur oberen Topföffnung hin offen ist.

In einer Ausführungsform beträgt das Keramikvolumen weniger als 95%, bevorzugt zwischen 75% 90% und besonders bevorzugt zwischen 80% und 85% des Spaltvolumens. Der Vorteil der genannten Wertebereiche besteht darin, dass die Form des Topfes in ihren Grundzügen der Form eines perfekten, nicht individualisierten Topfes ähnelt, aber zusätzlich die gewünschten Unregelmäßigkeiten, nämlich Kerben, Risse und scharfkantige Ränder aufweist. Dadurch behält der Topf seine Funktionalität und weist gleichzeitig eine größtmögliche Individualität auf.

Unter einer Keramikmasse mit mindestens einem ungebrannten keramischen Rohstoff, vorzugsweise mit mehreren keramischen Rohstoffen, wird eine knetbare, verformbare Masse verstanden. Eine solche Keramikmasse besteht in einer Ausführungsform zu einem Großteil und meist mehrheitlich aus keramischen Rohstoffen. Die Keramikmasse ist daher ein Feststoff mit einem Flüssigkeitsgehalt, der eine derartige Plastizität aufweist, dass er plastisch verformbar ist. Mit anderen Worten handelt es ich bei der Keramikmasse um einen Feststoff mit hoher Plastizität. Eine einmal verformte Keramikmasse ist aufgrund ihrer Feststoffeigenschaft formstabil, d. h. sie weist eine derart hohe Viskosität auf, dass es nicht ohne äußere Krafteinwirkung zu einer Verformung oder gar einem Zerfließen der Keramikmasse kommt. Diese Eigenschaften sind bei der Herstellung des Grünlings durch Formpressen vorteilhaft, da dadurch der Grünling nach dem Formpressen, dem Pressen der Oberform in die Unterform bis zur formgebenden Position, formstabil ist. Dies bedeutet, dass sich die Form des Grünlings zwischen dem Schritt Pressen der Oberform in die Unterform und dem Schritt Brennen, folglich auch während des Trocknens, nicht wesentlich ändert.

Unter keramischen Rohstoffen sind insbesondere Tonminerale und deren Gemische zu verstehen.

Bevorzugt ist die Keramikmasse eine Tonmasse, wobei unter einer Tonmasse eine Masse zu verstehen ist, die zu einem Großteil aus Tonmineralen und deren Gemischen besteht. Die Plastizitätseigenschaften von Tonmassen haben sich für das erfindungsgemäße Herstellungsverfahren als besonders vorteilhaft erwiesen, da die Tonmasse sich derart in dem Spalt verteilt, dass einerseits die Herstellung eines stabilen Topfes und andererseits auch die Herstellung von individualisierten Töpfen, insbesondere unverwechselbaren Oberflächenstrukturen der Topfränder, in besonderem Maße gewährleistet werden kann.

Besonders bevorzugt ist der Topf ein Blumentopf, eine Schale, eine Vase oder ein Untersetzer. Blumentöpfe, insbesondere sogenannte Blumenübertöpfe, eignen sich im besonderen Maße als Produkt des erfindungsgemäßen Verfahrens, da sie im Gebrauch entweder zur Aufnahme von Erde oder eines Pflanztopfes/Blumeninnentopfes verwendet werden. In beiden Fällen schränken Unregelmäßigkeiten, die durch das erfindungsgemäße Verfahren hergestellt werden, die eigentliche Funktionalität des Topfes, das Halten und Umschließen von Erde oder eines Pflanztopfes/Blumeninnentopfes, nicht ein.

Des Weiteren eignen sich die mit dem erfindungsgemäßen Verfahren hergestellten Blumentöpfe, Schalen, Vasen und Untersetzter aufgrund ihrer einzigartigen Ausgestaltung neben ihrer Verwendung als Aufbewahrungsmittel im besonderen Maße zur Verwendung als Dekorationsartikel und Kunstobjekt.

Erfindungsgemäß weist die Unterform eine den Boden des Topfes definierende Bodenfläche auf und die Keramikmasse wird vor dem Einbringen in die Unterform derart bereitgestellt, dass die Keramikmasse eine zylindrische Form mit kreisförmigen Deckelflächen aufweist, wobei die Deckelflächen kleiner sind als die Bodenfläche. Dadurch wird auf vorteilhafte Weise ein problemloses Einbringen der Keramikmasse in die Unterform sichergestellt. Zudem steht die Keramikmasse nach dem Einbringen aufgrund ihrer zylindrischen Form stabil auf der Bodenfläche der Unterform, sodass ein ungewolltes Verkippen der Keramikmasse in der Unterform vermieden wird. Zur Herstellung einer solchen zylinderförmigen Keramikmasse wird vorzugsweise ein Extruder verwendet.

In einer bevorzugten Ausführungsform des Verfahrens wird die Keramikmasse derart in die Unterform eingebracht, dass die Keramikmasse nach dem Einbringen und vor dem Pressen der Oberform in die Unterform exzentrisch in der Unterform angeordnet ist. In diesem Sinne kann auch davon gesprochen werden, dass die Keramikmasse im Sinne dieser Ausführungsform asymmetrisch, d. h. abweichend von einer Symmetrieachse der Unterform, in der Unterform platziert wird.

Durch ein solches exzentrisches, asymmetrisches Einbringen der Keramikmasse kann die großskalige Variation der Wandhöhe des Topfes über den Umfang des Topfes beeinflusst werden. So entsteht beim Verpressen der Abschnitt der Wand des Grünlings mit der maximalen Wandhöhe bevorzugt in dem Bereich der Unterform, welcher der Keramikmasse vor dem Pressen der Oberform in die Unterform am nächsten gewesen ist.

Dadurch werden Töpfe mit in Umfangrichtung variierenden großskaligen Wandhöhen hergestellt, wobei die Wandhöhe von einem Abschnitt mit einer maximalen Wandhöhe zu einem Abschnitt mit einer minimalen Wandhöhe hin in Umfangrichtung auf großen Skalen, d. h. auf Skalen des Umeiner minimalen Wandhöhe hin in Umfangrichtung auf großen Skalen, d. h. auf Skalen des Umfangs des Topfes bzw. des Topfrandes, abnimmt. Dies stellte eine großskalige Variation der Wandhöhe dar. Eine davon überlagerte kleinskalige Variation der Wandhöhe wird durch Risse und Kerben im Rand der Wand des Topfes gebildet. Eine kleinskalige Variation kann aber nichtsdestotrotz eine große Variation der Wandhöhe beinhalten wie beispielweise bei einem Riss, der sich fast bis zum Boden des Topfes erstreckt. Da es sich in diesem Fall aber um einen Riss handelt, ist deren Ausdehnung in Umfangrichtung betrachtet auf einen Bruchteil des Umfangs des Topfes bzw. des Topfrandes beschränkt. Daher ist auch eins solcher Riss eine kleinskalige Variation im Sinne der vorliegenden Erfindung.

Weiterhin erfolgt bei einer Ausführungsform des erfindungsgemäßen Verfahrens nach dem Entnehmen des Grünlings aus der Form und vor dem Trocknen des Grünlings ein Umformen des Grünlings. Nachdem der Grünling durch Verpressen hergestellt worden ist, weist die den Grünling bildende Keramikmasse immer noch eine hohe Plastizität auf, sodass die Form des Grünlings problemlos durch einen weiteren Umformschritt verändert werden kann. Beispielsweise kann ein zunächst durch Verpressen ausgebildeter Grünling mit einem kreisförmigen Querschnitt durch einen solchen sekundären Umformschritt in einen Grünling mit einem zumindest abschnittsweise dreieckigen, viereckigen, polygonalen oder ovalen Querschnitt umgeformt werden. Um dem Grünling eine Form mit geraden Wandabschnitten zu geben, wird der Grünling vorzugsweise mittels eben ausgebildeter Platten umgeformt, die beim Umformen mit einer äußeren Kraft auf die seitliche Oberfläche der Wand des Grünlings einwirken.

Diese sekundäre Umformung kann auch nur abschnittsweise erfolgen. Beispielweise kann ein zunächst durch Verpressen geformter Grünling mit einem über seine gesamte Höhe hinweg kreisförmigen Querschnitt durch einen sekundären Umformschritt derart geformt werden, dass der spätere Topf eine Topföffnung mit einem polygonalen oder ovalen Querschnitt aufweist, der Boden des Topfes aber weiterhin einen kreisförmigen Querschnitt aufweist. Dazu wird in einer Ausführungsform der obere, der späteren Topföffnung naheliegende Teil des Grünlings mittels eben ausgebildeter Platten zu einem ebene Flächen aufweisenden Topfabschnitt umgeformt, der beispielsweise eine viereckige Querschnittsfläche aufweist, und an den sich zum Boden des Grünlings hin stetig und sukzessive weitere Zwischenabschnitte anschließen bis hin zu einem letzten, den ursprünglichen, kreisförmigen Querschnitt aufweisenden Topfabschnitt. Die Querschnittsfläche geht dabei von einer polygonalen Form auf der Höhe der Topföffnung in eine kreisförmige Form auf der Höhe des Bodens des Topfes über.

Die vorliegende Erfindung umfasst zudem auch einen Topf, erhältlich durch das erfindungsgemäße Verfahren. Ein solcher Topf unterscheidet sich von Töpfen, die auf natürlichem Wege, d. h. durch Verwitterungsprozesse, individualisiert wurden, dahingehend, dass ein solcher Topf neuwertig ist.

Er besitzt somit die Stabilität und Materialstruktur eines neuen Topfes, erscheint aber zugleich wie ein Topf, der bestimmte Assoziationen wie Individualität, Erfahrenheit und Besonderheit bei seinem Betrachter wecken kann.

Unter einem solchen Topf aus Keramik ist unter anderem auch eine Schale, eine Vase oder ein Untersetzer zu verstehen. Insbesondere muss der Boden des Topfes nicht notwendigerweise für Flüssigkeiten dicht abgeschlossen sein. Dies ist beispielsweise häufig bei Blumentöpfen der Fall, da diese oft ein Loch im Boden aufweisen.

In einer Ausführungsform des Topfes weist der Topf eine im Wesentlichen als Hohlzylinder oder als Hohlkonus oder als Hohlkugelsegment ausgebildete Wand mit einer maximalen Höhe H, wobei die maximale Höhe H die maximale, entlang der Längsachse gemessene Höhe der Projektion der Wand auf die Längsachse ist, einen an einem unteren Ende der Wand ausgebildeten Boden und eine dem Boden gegenüberliegende im Wesentlichen kreisförmige obere Topföffnung auf, wobei die Wand mindestens eine sich an die obere Topföffnung anschließende Seitenöffnung aufweist. Eine solche Seitenöffnung wird durch einen in der Wand befindlichen Riss gebildet, der zur oberen Topföffnung hin offen ist.

In einer bevorzugten Ausführungsform weist der Topf eine oder mehrere Seitenöffnungen auf, die auf die Längsachse projizierte Ausdehnungen A besitzen, deren Werte ausschließlich zwischen 1 % und 10% und bevorzugt ausschließlich zwischen 1% und 3% der maximalen Höhe H der Wand des Topfes liegen. Eine solche Ausführungsform besitzt dementsprechend einen unregelmäßig ausgebildeten Rand des Topfes, dessen Erscheinungsbild von einem oder mehreren kleinerer Seitenöffnungen in Form von Rissen geprägt ist.

In einer weiteren Ausführungsform liegt mindestens eine Seitenöffnung vor, die eine auf die Längsachse projizierte Ausdehnung A besitzt, deren Wert zwischen 10% und 60%, bevorzugt zwischen 20% und 50% und besonders bevorzugt zwischen 30% bis 40% der maximalen Höhe H der Wand des Topfes liegt. Eine solche Ausführungsform besitzt dementsprechend einen besonders markanten und einzigartigen Riss.

Bevorzugt ist die Seitenöffnung abschnittsweise von einem scharfkantig ausgebildeten Rand des Topfes umgeben. Eine solche scharfkantige Oberflächenstruktur ist insofern besonders vorteilhaft, da sie nur selten als ein durch die Herstellung beabsichtigtes Merkmal eines Topfes wahrgenommen wird und daher beispielsweise den Betrachter glauben lassen kann, dass diese scharfkantige Struktur durch eine von Hand in manueller Weise durchgeführte Maßnahme, beispielweise einen Akt der Gewalt, entstanden sein müsste. Dies kann die Wertigkeit des Topfes im Auge des Betrachters erhöhen.

Weitere Vorteile, Merkmale und Anwendungsmöglichkeiten der vorliegenden Erfindung werden deutlich anhand der folgenden Beschreibung bevorzugter Ausführungsformen und der zugehörigen Figuren. Es zeigen:
- Figur 1: die Form zum Ausführen des erfindungsgemäßen Verfahrens in der geöffneten Position,
- Figur 2: die Form zum Ausführen des erfindungsgemäßen Verfahrens in der formgebenden Position,
- Figur 3: eine perspektivische Ansicht einer Ausführungsform des erfindungsgemäßen Topfes,
- Figur 4: eine Seitenansicht einer Ausführungsform des erfindungsgemäßen Topfes.

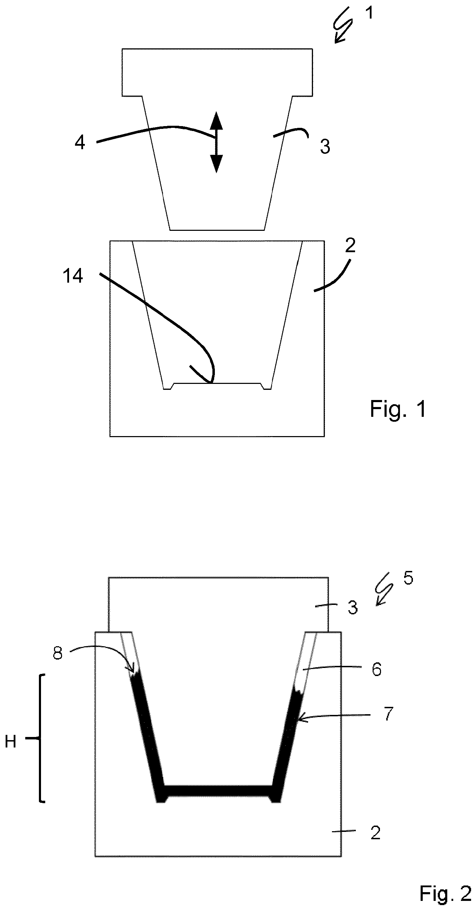

Figur 1 zeigt die Form 1, wie sie im erfindungsgemäßen Verfahren zum Einsatz kommt. Die Form 1 ist dabei in der geöffneten Position gezeigt. Die Oberform 3 ist oberhalb der Unterform 2 angeordnet. In der hier gezeigten Ausführungsform kann die Oberform 3 entlang der Längsachse 4 sowohl zur Unterform 2 hin als auch von der Unterform 2 weg bewegt werden. Für das Formpressen gemäß dem erfindungsgemäßen Verfahren wird die Oberform 3 entlang der Längsachse 4 in Richtung der Unterform 2 bewegt. Der Boden des durch das Formpressen erzeugten Grünlings 7 wird durch die Bodenfläche 14 der Unterform 2 definiert.

Figur 2 zeigt nun den Verbund 5 aus der Form 1 und einem Grünling 7 aus Keramikmasse. In der hier gezeigten Darstellung befindet sich die Form nun in der formgebenden Position. Ersichtlich ist daher auch der Spalt 6, welcher sich zwischen der Oberform 3 und der Unterform 2 in dieser Position ergibt. In der hier gezeigten Ausführungsform wird der Spalt 6 ausschließlich von der Oberform 3 und der Unterform 2 begrenzt.

Der Spalt 6 ist abschnittsweise von dem Grünling 7 aus Keramikmasse gefüllt. Gemäß dem erfindungsgemäßen Verfahren ist das Keramikvolumen, d. h. das Volumen der Keramikmasse 7 vor bzw. bei dem Pressen, kleiner als das Spaltvolumen, d. h. das Volumen des zwischen Oberform 3 und Unterform 2 gebildeten Spaltes 6. Daher kann die Keramikmasse 7 nach dem Zusammenführen von Oberform 3 und Unterform 2, d. h. nach dem Formpressen, nicht das komplette Spaltvolumen ausfüllen. Dadurch ergeben sich insbesondere am oberen Rand 8 des Grünlings 7 für jeden einzelnen Topf unverwechselbare Oberflächenstrukturen, die auf einer statistisch unterschiedlich verteilten Ausfüllung des Spaltes 6 durch die Keramikmasse 7 beruhen.

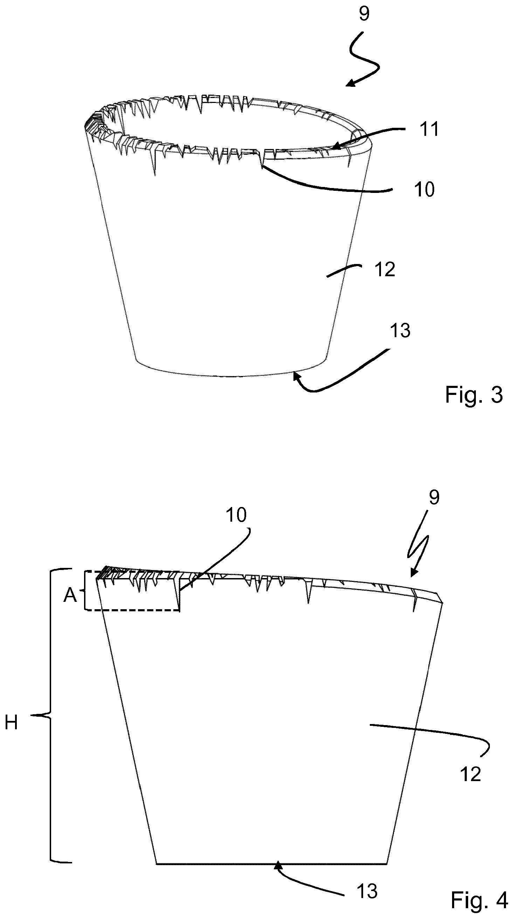

Die Wand 12 des Grünlings 7 erstreckt sich in der formgebenden Position bis zu einer maximalen Höhe H. Die maximale Höhe H der Wand 12 wird dabei entlang der Längsachse gemessen und gibt folglich die Größe der Projektion der Wand 12 auf die Längsachse an. Die maximale Höhe ist auch in Figur 4 für den fertigen Topf 9 dargestellt.

Gemäß dem erfindungsgemäßen Verfahren erfolgen nach dem in Figur 2 gezeigten Verpressen die Entnahme, das Trocknen und das Brennen des Grünlings 7. Das Endprodukt dieses Herstellungsprozesses, nämlich der erfindungsgemäße Topf 9, ist in Figur 3 gezeigt. Dabei ist zu beachten, dass Figur 3 nur einen von unendlich vielen möglichen individualisierten Töpfen zeigt, da das erfindungsgemäße Verfahren auf die Herstellung unverwechselbarer Töpfe ausgerichtet ist. Figur 3 zeigt daher in diesem Sinne nur das Beispiel eines Topfes 9, wie dieser nach dem erfindungsgemäßen Herstellungsverfahren aussehen kann. Ein anderer Topf würde sich von dem hier gezeigten zumindest in Details der Oberflächenstruktur des Topfrandes unterscheiden.

Erfindungsgemäß weist der in der Figur 3 gezeigte Topf 9 mehrere Risse 10 und Kerben 11 auf. Die Risse 10 bilden Seitenöffnungen im Sinne der vorliegenden Anmeldung. Darüber hinaus weist der Topf 9 einen Boden 13 und eine Wand 12 auf, wobei die Höhe der Wand 12 in Umfangrichtung des Topfes sowohl kleinskalig als auch großskalig variiert.

Figur 4 zeigt eine Seitenansicht des in Figur 3 gezeigten Topfes 9. In dieser Abbildung ist die maximale Höhe H eingezeichnet. Von der maximalen Höhe im links dargestellten Abschnitt des Topfes 9 ausgehend nimmt die Wandhöhe großskalig zum gegenüberliegenden rechts dargestellten Abschnitt des Topfes 9 ab. H stellt die maximale Höhe des Topfes 9 da, welche entlang der Längsachse 4 gemessen wird. Zudem ist ein Riss 10 gezeigt, der eine auf die Längsachse projizierte Ausdehnung A aufweist. Die Ausdehnung A beträgt in dem hier gezeigten Beispiel ca. 15% der maximalen Höhe H. Der Riss 10 erstreckt sich in Umfangrichtung nur über einen Bruchteil des Umfangs des Topfrandes. Daher handelt es sich bei dem Riss 10 um eine kleinskalige Variation der Wand höhe.

### Bezugszeichenliste

- 1: Form
- 2: Unterform
- 3: Oberform
- 4: Längsachse
- 5: Verbund aus Form und Grünling/ Keramikmasse
- 6: Spalt
- 7: Grünling aus Keramikmasse
- 8: Rand des Grünlings
- 9: Topf
- 10: Riss
- 11: Kerbe
- 12: Wand
- 13: Boden
- 14: Bodenfläche der Unterform
- H: maximale Höhe der Wand
- A: auf Längsachse projizierte Ausdehnung des Risses

## Patentansprüche

1. Verfahren zur Herstellung eines Topfes (9) aus Keramik mit den Schritten Bereitstellen einer Form (1) mit einer Unterform (2) und einer Oberform (3), wobei die Oberform (3) und die Unterform (2) entlang einer Längsachse (4) relativ zueinander von einer geöffneten Position in eine formgebende Position bewegbar sind und in der formgebenden Position ein Spalt (6) zwischen der Oberform (3) und der Unterform (2) mit einem Spaltvolumen einen Boden (13) und zumindest abschnittsweise eine Wand (12) des Topfes (9) definiert,
Einbringen einer Keramikmasse (7) mit mindestens einem ungebrannten keramischen Rohstoff und mit einem Keramikvolumen in die Unterform (2),
Pressen der Oberform (3) in die Unterform (2) bis die formgebende Position erreicht ist, so dass die Keramikmasse (7) in dem Spalt (6) verteilt wird und einen Grünling (7) des Topfes (9) bildet,
Entnehmen des Grünlings (7) aus der Form (1),
Trocknen des Grünlings (7) und
Brennen des Grünlings (7) zu dem Topf (9),
wobei die Unterform (2) eine den Boden (13) des Topfes (9) definierende Bodenfläche (14) aufweist und die Keramikmasse (7) vor dem Einbringen in die Unterform (2) derart bereitgestellt wird, dass die Keramikmasse (7) eine zylindrische Form mit kreisförmigen Deckelflächen aufweist, wobei die Deckelflächen kleiner sind als die Bodenfläche (14),
**dadurch gekennzeichnet,**
**dass** das Keramikvolumen kleiner ist als das Spaltvolumen.

2. Verfahren gemäß Anspruch 1, **dadurch gekennzeichnet, dass** die Keramikmasse (7) einen Wassergehalt in einem Bereich von 10% bis 25%, bevorzugt 15% bis 20% und besonders bevorzugt 16% bis 18% aufweist.

3. Verfahren gemäß einem der voranstehenden Ansprüche, **dadurch gekennzeichnet, dass** vor dem Pressen der Oberform (3) in die Unterform (2) ein Einschneiden der Keramikmasse (7) mit einem Schneidwerkzeug erfolgt.

4. Verfahren gemäß Anspruch 3, **dadurch gekennzeichnet, dass** das Einschneiden der Keramikmasse (7) derart erfolgt, dass nach dem Einbringen der Keramikmasse (7) in die Unterform (2) eine Oberfläche der Keramikmasse (7), die in der geöffneten Position der Form zu einer Öffnung der Unterform (2) hin ausgerichtet ist, zumindest einen Einschnitt aufweist.

5. Verfahren gemäß einem der voranstehenden Ansprüche, **dadurch gekennzeichnet, dass** das Keramikvolumen weniger als 95%, bevorzugt zwischen 75% und 90% und besonders bevorzugt zwischen 80% und 85% des Spaltvolumens beträgt.

6. Verfahren gemäß einem der voranstehenden Ansprüche, **dadurch gekennzeichnet, dass** die Keramikmasse (7) eine Tonmasse ist.

7. Verfahren gemäß einem der voranstehenden Ansprüche, **dadurch gekennzeichnet, dass** der Topf (9) ein Blumentopf, eine Schale, eine Vase oder ein Untersetzer ist.

8. Verfahren gemäß einem der vorangegangen Ansprüche, **dadurch gekennzeichnet, dass** die Keramikmasse (7) derart in die Unterform (2) eingebracht wird, dass die Keramikmasse (7) nach dem Einbringen und vor dem Pressen der Oberform (3) in die Unterform (2) exzentrisch in der Unterform angeordnet ist.

9. Verfahren gemäß einem der vorangegangenen Ansprüche, **dadurch gekennzeichnet, dass** nach dem Entnehmen des Grünlings (7) aus der Form (1) und vor dem Trocknen des Grünlings (7) ein Umformen des Grünlings (7) erfolgt.

10. Topf (9), erhältlich durch ein Verfahren gemäß einem der Ansprüche 1 bis 9.

11. Topf (9) gemäß Anspruch 10, **dadurch gekennzeichnet, dass** der Topf (9) eine im Wesentlichen als Hohlzylinder oder als Hohlkonus oder als Hohlkugelsegment ausgebildete Wand (12) mit einer maximalen Höhe H, wobei die maximale Höhe H die maximale, entlang der Längsachse (4) gemessene Höhe der Projektion der Wand (12) auf die Längsachse (4) ist, einen an einem unteren Ende der Wand (12) ausgebildeten Boden (13) und eine dem Boden (13) gegenüberliegende im Wesentlichen kreisförmige obere Topföffnung aufweist, wobei die Wand (12) mindestens eine sich an die obere Topföffnung anschließende Seitenöffnung (10) aufweist.

12. Topf (9) gemäß Anspruch 11, **dadurch gekennzeichnet, dass** der Topf eine oder mehrere Seitenöffnungen (10) aufweist, die auf die Längsachse (4) projizierte Ausdehnungen A besitzen, deren Werte ausschließlich zwischen 1% und 10% und bevorzugt ausschließlich zwischen 1% und 3% der maximalen Höhe H der Wand (12) des Topfes (9) liegen.

13. Topf (9) gemäß Anspruch 11, **dadurch gekennzeichnet, dass** mindestens eine Seitenöffnung (10) vorliegt, die eine auf die Längsachse (4) projizierte Ausdehnung A besitzt, deren Wert zwischen 10% und 60%, bevorzugt zwischen 20% und 50% und besonders bevorzugt zwischen 30% und 40% der maximalen Höhe H der Wand (12) des Topfes (9) liegt.

14. Topf (9) gemäß einem der Ansprüche 11 bis 13, **dadurch gekennzeichnet, dass** die Seitenöffnung (10) abschnittweise von einem scharfkantig ausgebildeten Rand des Topfes (9) umgeben ist.

## Claims

1. A method of manufacturing a ceramic pot (9) comprising the steps of
providing a mould (1) with a lower mould (2) and an upper mould (3), the upper mould (3) and the lower mould (2) being movable relative to one another along a longitudinal axis (4) from an open position into a moulding position, and wherein in the moulding position a gap (6) between the upper mould (3) and the lower mould (2) comprising a gap volume defines a base (13) and at least in sections a wall (12) of the pot (9),
introducing a ceramic mass (7) with at least one unfired ceramic raw material and with a ceramic volume into the lower mould (2),
pressing the upper mould (3) into the lower mould (2) until the moulding position is reached, so that the ceramic mass (7) is distributed in the gap (6) and forms a green compact (7) of the pot (9),
removing the green compact (7) from the mould (1),
drying the green compact (7) and
firing the green compact (7) to the pot (9),
wherein the lower mould (2) has a bottom surface (14) defining the bottom (13) of the pot (9) and the ceramic mass (7) is provided before being placed in the lower mould (2) in such a way that the ceramic mass (7) comprises a cylindrical shape with circular lid surfaces, the lid surfaces being smaller than the bottom surface (14),
**characterized in that**
the ceramic volume is smaller than the gap volume.

2. The method according to claim 1, **characterized in that** the ceramic mass (7) comprises a water content in a range of 10% to 25%, preferably 15% to 20% and particularly preferably 16% to 18%.

3. The method according to one of the preceding claims, **characterised in that** before the upper mould (3) is pressed into the lower mould (2), the ceramic mass (7) is cut into with a cutting tool.

4. The method according to claim 3, **characterized in that** the cutting of the ceramic mass (7) is carried out in such a way that, after the ceramic mass (7) has been introduced into the lower mould (2), a surface of the ceramic mass (7) which, in the opened position of the mould, is aligned with an opening of the lower mould (2) has at least one incision.

5. The method according to any one of the preceding claims, **characterized in that** the ceramic volume is less than 95%, preferably between 75% and 90% and more preferably between 80% and 85% of the gap volume.

6. The method according to any one of the preceding claims, **characterized in that** the ceramic mass (7) is a clay mass.

7. The method according to any one of the preceding claims, **characterized in that** the pot (9) is a flower pot, a bowl, a vase or a coaster.

8. The method according to any one of the preceding claims, **characterized in that** the ceramic mass (7) is introduced into the lower mould (2) in such a way that the ceramic mass (7) is arranged eccentrically in the lower mould after introduction and before pressing of the upper mould (3) into the lower mould (2).

9. The method according to any one of the preceding claims, **characterized in that** after removing the green compact (7) from the mould (1) and before drying the green compact (7), the green compact (7) is reshaped.

10. A pot (9) obtainable by a method according to any one of claims 1 to 9.

11. The pot (9) according to claim 10, **characterized in that** the pot (9) comprises a wall (12) substantially shaped as a hollow cylinder or as a hollow cone or as a hollow sphere segment having a maximum height H, wherein the maximum height H is the maximum height, measured along the longitudinal axis (4), of a projection of the wall (12) onto the longitudinal axis (4), a bottom (13) formed at a lower end of the wall (12) and a substantially circular upper pot opening opposite the bottom (13), the wall (12) comprising at least one side opening (10) adjoining the upper pot opening.

12. The pot (9) according to claim 11, **characterized in that** the pot comprises one or more lateral openings (10) having expansions A projected onto the longitudinal axis (4), the values of which are exclusively between 1% and 10% and preferably exclusively between 1% and 3% of the maximum height H of the wall (12) of the pot (9).

13. The pot (9) according to claim 11, **characterized in that** there is at least one lateral opening (10) having an extension A projected onto the longitudinal axis (4), the value of which is between 10% and 60%, preferably between 20% and 50% and more preferably between 30% and 40% of the maximum height H of the wall (12) of the pot (9).

14. The pot (9) according to any one of claims 11 to 13, **characterised in that** the side opening (10) is surrounded in sections by a sharp-edged rim of the pot (9).

## Revendications

1. Procédé de fabrication d'un pot (9) en céramique avec les étapes
mettre à disposition un moule (1) avec un moule inférieur (2) et un moule supérieur (3), le moule supérieur (3) et le moule inférieur (2) pouvant être déplacés l'un par rapport à l'autre le long d'un axe longitudinal (4) à partir d'une position ouverte vers une position donnant une forme et, dans la position donnant une forme, une fente (6) avec un volume de fente entre le moule supérieur (3) et le moule inférieur (2) définissant un fond (13) et au moins partiellement une paroi (12) du pot (9),
introduire, dans le moule inférieur (2), une masse de céramique (7) contenant au moins une matière céramique crue et ayant un volume de céramique,
presser le moule supérieur (3) dans le moule inférieur (2) jusqu'à ce que la position donnant une forme soit atteinte, de façon que la masse de céramique (7) soit repartie dans la fente (6) et constitue une ébauche crue (7) du pot (9), retirer l'ébauche crue (7) du moule (1),
sécher l'ébauche crue (7) et
fritter l'ébauche crue (7) pour en faire le pot (9),
le moule inférieur (2) comprenant une surface de fond (14) définissant le fond (13) du pot (9) et la masse de céramique (7) étant mise à disposition, avant l'introduction dans le moule inférieur (2), de façon telle que la masse de céramique (7) ait une forme cylindrique avec des surfaces de couvercle circulaires, les surfaces de couvercle étant plus petites que la surface de fond (14),
**caractérisé en ce que** le volume de céramique est plus petit que le volume de fente.

2. Procédé selon la revendication 1, **caractérisé en ce que** la masse de céramique (7) présente une teneur en eau dans une plage de 10% à 25%, de préférence de 15% à 20% et plus particulièrement de 16% à 18%.

3. Procédé selon l'une des revendications précédentes, **caractérisé en ce que**, avant que le moule supérieur (3) soit pressée dans le moule inférieur (2), la masse de céramique (7) est entaillée avec un outil tranchant.

4. Procédé selon l'une des revendications précédentes, **caractérisé en ce que** l'entaille de la masse de céramique (7) s'exécute de façon telle qu'après l'introduction de la masse de céramique (7) dans le moule inférieur, une surface de la masse de céramique (7) qui, dans la position ouverte du moule, est orientée vers une ouverture du moule inférieur (2), comprenne au moins une entaille.

5. Procédé selon l'une des revendications précédentes, **caractérisé en ce que** le volume de céramique soit moins de 95%, de préférence entre 75% et 90% et plus particulièrement entre 80% et 85% du volume de fente.

6. Procédé selon l'une des revendications précédentes, **caractérisé en ce que** la masse de céramique (7) est une pâte céramique.

7. Procédé selon l'une des revendications précédentes, **caractérisé en ce que** le pot (9) est un pot de fleurs, une coupelle, un vase ou une soucoupe.

8. Procédé selon l'une des revendications précédentes, **caractérisé en ce que** la masse de céramique (7) est introduite dans le moule inférieur (2) d'une manière telle que la masse de céramique (7), après l'introduction et avant de presser le moule supérieur (3) dans le moule inférieur (2), est disposée de manière excentrique dans le moule inférieur.

9. Procédé selon l'une des revendications précédentes, **caractérisé en ce que**, après le retrait de l'ébauche crue (7) du moule (1) et avant le séchage de l'ébauche crue (7), un nouveau formage de l'ébauche crue (7) s'ensuit.

10. Pot (9) pouvant être obtenu par un procédé selon l'une des revendications 1 à 9.

11. Pot (9) selon la revendication 10, **caractérisé en ce que** le pot (9) comprend essentiellement une paroi (12) formée comme un cylindre creux ou un cône creux ou un segment de sphère creuse d'une hauteur maximale H, la hauteur maximale H étant la hauteur maximale mesurée le long de l'axe longitudinal (4), de la projection de la paroi (12) sur l'axe longitudinal (4), un fond (13) formé à une extrémité inférieure de la paroi (12) et une ouverture de pot supérieure de forme essentiellement circulaire à l'opposé du fond (13), la paroi (12) comprenant au moins une ouverture latérale (10) reliée à l'ouverture supérieure du pot.

12. Pot (9) selon la revendication 11, **caractérisé en ce que** le pot comprend une ou plusieurs ouvertures latérales (10) qui possèdent des extensions A projetées sur l'axe longitudinal (4), dont les valeurs se situent exclusivement entre 1% et 10% et de préférence exclusivement entre 1% et 3% de la hauteur H maximale de la paroi (12) du pot (9).

13. Pot (9) selon la revendication 11, **caractérisé en ce qu'**il y a au moins une ouverture latérale (10) qui possède une extension A projetée sur l'axe longitudinal (4), dont la valeur se situe entre 10% et 60%, de préférence entre 20% et 50% et plus particulièrement entre 30% et 40% de la hauteur H maximale de la paroi (12) du pot (9).

14. Pot (9) selon l'une des revendications 11 à 13, **caractérisé en ce que** l'ouverture latérale (10) est entourée, par sections, d'un bord du pot (9) formé vif.
